(19) Europäisches Patentamt
European Patent Office
Office européen des brevets

(11) EP 4 318 652 A1

(12) # EUROPEAN PATENT APPLICATION
published in accordance with Art. 153(4) EPC

(43) Date of publication:
**07.02.2024 Bulletin 2024/06**

(21) Application number: **22781708.7**

(22) Date of filing: **01.04.2022**

(51) International Patent Classification (IPC):
***H01M 4/36*** (2006.01) ***H01M 4/62*** (2006.01)
***H01M 4/525*** (2010.01) ***H01M 4/505*** (2010.01)
***H01M 10/052*** (2010.01) ***C01G 53/00*** (2006.01)
***H01M 4/02*** (2006.01)

(52) Cooperative Patent Classification (CPC):
**C01G 53/00; H01M 4/02; H01M 4/36; H01M 4/505; H01M 4/525; H01M 4/62; H01M 10/052;**
Y02E 60/10

(86) International application number:
**PCT/KR2022/004740**

(87) International publication number:
**WO 2022/211589 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **01.04.2021 KR 20210042809**

(71) Applicant: **Samsung SDI Co., Ltd.**
**Yongin-si, Gyeonggi-do 17084 (KR)**

(72) Inventors:
- **KAPYLOU, Andrei**
**Yongin-Si Gyeonggi-do 17084 (KR)**
- **MOON, Jong Seok**
**Yongin-Si Gyeonggi-do 17084 (KR)**
- **SON, In Hyuk**
**Yongin-Si Gyeonggi-do 17084 (KR)**
- **KIM, Gue Sung**
**Yongin-Si Gyeonggi-do 17084 (KR)**
- **MAH, Sang Kook**
**Yongin-Si Gyeonggi-do 17084 (KR)**
- **JO, Sung Nim**
**Yongin-Si Gyeonggi-do 17084 (KR)**

(74) Representative: **Marks & Clerk LLP**
**15 Fetter Lane**
**London EC4A 1BW (GB)**

(54) **COMPOSITE CATHODE ACTIVE MATERIAL, CATHODE AND LITHIUM BATTERY EMPLOYING SAME, AND PREPARATION METHOD FOR SAME**

(57) Provided are a composite cathode active material, a cathode and a lithium battery that include the composite cathode active material, and a method of preparing the composite cathode active material, the composite cathode active material including: a core including a lithium transition metal oxide; and a shell disposed along a surface of the core, wherein the shell includes at least one first metal oxide represented by $M_aO_b$ (where $0<a\leq3$, $0<b<4$, and when a is 1, 2, or 3, b is not an integer); a carbon-based material; and a doped phosphorus (P) element, the at least one first metal oxide is disposed in a matrix of the carbon-based material, and M is at least one metal selected from Groups 2 to 13, 15, and 16 of the Periodic Table of Elements.

FIG. 1

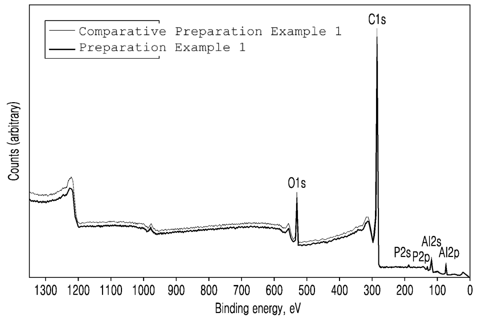


EP 4 318 652 A1

## Description

### Technical Field

The present disclosure relates to a composite cathode active material, a cathode and a lithium battery that include the composite cathode active material, and a method of preparing the composite cathode active material.

### Background Art

For miniaturization and high performance of various devices, high energy density of lithium batteries is becoming more important, in addition to miniaturization and lighter weight. In other words, high-capacity lithium batteries are becoming important.

To implement lithium batteries suitable for the use above, cathode active materials having high capacity are being considered.

Nickel-based cathode active materials of the related art have degraded lifespan characteristics and poor thermal stability due to side reactions.

Therefore, there is a need for a method capable of preventing deterioration of battery performance while including a nickel-based cathode active material.

### Disclosure

### Technical Problem

An aspect provides a novel composite cathode active material capable of inhibiting a side reaction of a composite cathode active material and improving reversibility of an electrode reaction, so as to prevent deterioration of lithium performance.

Another aspect provides a cathode including the composite cathode active material.

Another aspect provides a lithium battery including the cathode.

Another aspect provides a method of preparing the composite cathode active material.

### Technical Solution

According to an aspect, provided is a composite cathode active material including:

a core including a lithium transition metal oxide; and
a shell disposed along a surface of the core,
wherein the shell includes: at least one first metal oxide represented by $M_aO_b$ (where $0<a\leq3$, $0<b<4$, and when a is 1, 2, or 3, b is not an integer); a carbon-based material; and a doped phosphorus (P) element,
the at least one first metal oxide is disposed in a matrix of the carbon-based material, and M is at least one metal selected from Groups 2 to 13, 15, and 16 of the Periodic Table of Elements.

According to another aspect, provided is
a cathode including the cathode active material.

According to another aspect, provided is
a lithium battery including the cathode.

According to another aspect, provided is a method of preparing a composite cathode active material, the method including:

providing a lithium transition metal oxide;
providing a composite; and
mechanically milling the lithium transition metal oxide and the composite,
wherein the composite includes: at least one first metal oxide represented by $M_aO_b$ (where $0<a\leq3$, $0<b<4$, and when a is 1, 2, or 3, b is not an integer); a carbon-based material; and a doped phosphorus (P) element,
the at least one first metal oxide is disposed in a matrix of the carbon-based material, and M is at least one metal selected from Groups 2 to 13, 15, and 16 of the Periodic Table of Elements.

## Advantageous Effects

According to an aspect, a composite cathode active material includes a shell including a first metal oxide, a phosphorus (P) element doped with a carbon-based material, and thus high-temperature cycle characteristics of a lithium battery may be improved and an increase in internal resistance a lithium battery may be suppressed.

## Description of Drawings

FIG. 1 is an XPS spectrum of an undoped composite prepared in Preparation Example 1 and a composite doped with a phosphorus (P) element prepared in Preparation Example 1.

FIG. 2 is a schematic view of a lithium battery according to an embodiment.

## Best Mode

The present inventive concept described hereinbelow may have various modifications and various embodiments, example embodiments will be illustrated in the drawings and more fully described in the detailed description. The present inventive concept may, however, should not be construed as limited to the example embodiments set forth herein, and rather, should be understood as covering all modifications, equivalents, or alternatives falling within the scope of the present inventive concept.

The terms used herein is for the purpose of describing particular embodiments only, and is not intended to be limiting the present inventive concept. An expression used in the singular encompasses the expression of the plural, unless it has a clearly different meaning in the context. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof. As used herein, "/" may be interpreted as "and", or as "or" depending on the context.

In the drawings, thicknesses may be magnified or exaggerated to clearly illustrate various layers and regions. Like reference numbers may refer to like elements throughout the drawings and the following description. It will be understood that when one element, layer, film, section, sheet, etc. is referred to as being "on" another element, it can be directly on the other element or intervening elements may be present therebetween. Although the terms "first," "second," etc. may be used herein to describe various elements, these elements should not be limited by these terms. These terms are only used to distinguish one element from another element.

Hereinafter, according to example embodiments, a composite cathode active material, a cathode and a lithium battery that include the composite cathode active material, and a method of preparing the composite cathode active material will be further described in detail.

A composite cathode active material includes: a core including a lithium transition metal oxide; and a shell disposed along a surface of the core, wherein the shell includes at least one first metal oxide represented by $M_aO_b$ (where $0<a\leq3$, $0<b<4$, and when a is 1, 2, or 3, b is not an integer); a carbon-based material; and a doped phosphorus (P) element, the at least one first metal oxide is disposed in a matrix of the carbon-based material, and M is at least one metal selected from Groups 2 to 13, 15, and 16 of the Periodic Table of Elements.

Hereinafter, a theoretical basis for providing an excellent effect of a composite cathode active material according to an embodiment will be described, but the theoretical basis is to help understanding of the present inventive concept and is not intended to limit the present inventive concept in any way.

On the core of the composite cathode active material, the shell including the first metal oxide, the carbon-based material, and the P element may be arranged. The P element included in the shell may be a P element doped on the shell. The P element doped on the shell may form a chemical bond with the carbon-based material and/or the first metal oxide. The P element doped on the shell may be distinguished from a P element physically disposed around the composite cathode active material. The P element doped on the shell may be, for example, distinguished from a P element disposed around the composite cathode active material by mixing the composite cathode active material and the P-containing compound or a composition including the same (for example, a binder, a conductive material, an electrolyte solution, etc). The P atom may have a larger atomic radius and lower electronegativity than a carbon (C) atom. Therefore, in the shell including the carbon-based material as a main component, structural defects of the carbon-based material and the resultant non-uniformity of charge carrier density can be compensated. For example, by including the P element in the shell, i.e., by adding electrons of the P element to a $\pi$-electron system of the carbon-based material, the density of charge carriers may be increased and the non-uniformity of the charge carrier density may be also alleviated. Therefore, by including the doped P element in the shell, the reversibility of the electrode reaction on the surface of the composite

cathode active material may be increased and the internal resistance of the electrode may be reduced, thereby improving the cycle characteristics of a battery including the composite cathode active material.

Carbon-based materials in the art easily agglomerate, and thus are difficult to be uniformly coated on the core. Meanwhile, the composite cathode active material uses a composite including a plurality of first metal oxides disposed in a matrix of the carbon-based material, thereby preventing aggregation of the carbon-based material and uniformly disposing the shell on the core. Accordingly, by effectively blocking a contact between the core and an electrolyte, side reactions due to the contact therebetween may be prevented. In addition, the generation of a resistive layer may be suppressed by suppressing cation mixing by the electrolyte. Also, elution of transition metal ions may be also suppressed. The carbon-based material may be, for example, a crystalline carbon-based material. The carbon-based material may be, for example, a carbon-based nanostructure. The carbon-based material may be, for example, a two-dimensional carbon-based nanostructure. An example of the carbon-based material may be graphene. In this case, since a shell including graphene and/or a matrix thereof has flexibility, a change in volume of the composite cathode active material may be easily accepted during charging and discharging of a battery, and accordingly, occurrence of cracks in the composite cathode active material may be suppressed. Since the carbon-based material has high electronic conductivity, interfacial resistance between the composite cathode active material and an electrolyte solution may decrease. Therefore, despite the introduction of the shell including the carbon-based material, the internal resistance of a lithium battery may be maintained or reduced.

Since the carbon-based material included in the shell of the composite cathode active material is derived from a graphene matrix, the carbon-based material may have a relatively low density and high porosity as compared with a conventional carbon-based material derived from a graphite-based material. A d002 interplanar distance of the carbon-based material included in the shell of the composite cathode active material may be, for example, greater than or equal to about 3.38 angstrom (Å), greater than or equal to about 3.40 Å, greater than or equal to about 3.45 Å, greater than or equal to about 3.50 Å, greater than or equal to about 3.60 Å, greater than or equal to about 3.80 Å, or greater than or equal to about 4.00 Å. The d002 interplanar distance of the carbon-based material included in the shell of the composite cathode active material may be, for example, in a range of about 3.38 to about 4.0 Å, about 3.38 to about 3.8 Å, about 3.38 to about 3.6 Å, about 3.38 to about 3.5 Å, or about 3.38 to about 3.45 Å. In contrast, the d002 interplanar distance of a conventional carbon-based material derived from a graphite-based material may be, for example, less than or equal to about 3.38 Å or in a range of about 3.35 Å to about 3.38 Å.

Since the first metal oxide has voltage resistance, deterioration of the lithium transition metal oxide included in the core may be prevented during charging and discharging at a high voltage. For example, the shell may include one type of the first metal oxide or two or more different types of the first metal oxide.

Consequently, an increase in the internal resistance of a lithium battery including the aforementioned composite cathode active material may be suppressed, thereby improving the cycle characteristics at a high-temperature and a high-voltage.

In the composite cathode active material, a content of the shell may be, for example, in a range of 0.5 wt% to 3 wt%, 0.5 wt% to 2.5 wt%, 0.5 wt% to 2 wt%, or 0.5 wt% to 1.5 wt%, based on the total weight of the composite cathode active material. In addition, a content of first metal oxide may be, for example, in a range of 0.3 wt% to 1.8 wt%, 0.3 wt% to 1.5 wt%, 0.3 wt% to 1.2 wt%, or 0.3 wt% to 0.9 wt%, based on the total weight of the composite cathode active material. When the composite cathode active material includes the shell and the first metal oxide within the ranges above, respectively, the cycle characteristics of a lithium battery including the composite cathode active material may be further improved.

The content of the doped P element included in the shell may be, for example, greater than 0 to 5 at%, and in a range of 0.01 at% to 4 at%, 0.1 at% to 3 at%, 0.1 at% to 2 at%, 0.1 at% to 1.5 at%, or 0.3 at% to 1 at%, based on the total number of atoms in the shell. By doping the shell with the P element having such a content range, the cycle characteristics of a lithium battery including the composite cathode active material may be further improved. The content of the doped P element included in the shell may be obtained from, for example, a peak obtained by measuring an XPS spectrum of the surface of the composite cathode active material.

The content of the first metal included in the shell may be, for example, greater than 0 at% and up to 10 at%, for example, in a range of 0.1 at% to 9.5 at%, 1 at% to 9 at%, 2 at% to 9 at%, 3 at% to 9 at%, 3 at% to 8 at%, or 4 at% to 8 at%, based on the total number of atoms in the shell. By including the first metal having such a content range in the shell, the cycle characteristics of a lithium battery including the composite cathode active material may be further improved. The content of the first metal included in the shell may be obtained from, for example, a peak obtained by measuring an XPS spectrum of the surface of the composite cathode active material.

The content of the carbon included in the shell may be, for example, in a range of 80 at% to 99 at%, 80 at% to 95 at%, 80 at% to 93 at%, 80 at% to 91 at%, or 83 at% to 90 at%, based on the total number of atoms in the shell. By including the carbon having such a content range in the shell, the cycle characteristics of a lithium battery including the composite cathode active material may be further improved. The content of the carbon included in the shell may be obtained from, for example, a peak obtained by measuring an XPS spectrum of the surface of the composite cathode

active material.

A metal included in the first metal oxide may be, for example, at least one selected from Al, Nb, Mg, Sc, Ti, Zr, V, W, Mn, Fe, Co, Pd, Cu, Ag, Zn, Sb, and Se. The first metal oxide may be, for example, at least one selected from $Al_2O_z$ (where 0<z<3), $NbO_x$ (where 0<x<2.5), $MgO_x$ (where 0<x<1), $Sc_2O_2$ (where 0<z<3), $TiO_y$ (where 0<y<2), $ZrO_y$ (where 0<y<2), $V_2O_z$ (where 0<z<3), $WO_y$ (where 0<y<2), $MnO_y$ (where 0<y<2), $Fe_2O_z$ (where 0<z<3), $Co_3O_w$ (where 0<w<4), $PdO_x$ (where 0<x<1), $CuO_x$ (where 0<x<1), $AgO_x$ (where 0<x<1), $ZnO_x$ (where 0<x<1), $Sb_2O_z$ (where 0<z<3), and $SeO_y$ (where 0<y<2). By disposing the first metal oxide in a matrix of the first carbon-based material, the uniformity of the shell on the core may be improved, and the voltage resistance of the composite cathode active material may be further improved. For example, the shell may include, as the first metal oxide, $Al_2O_x$ (where 0<x<3).

The shell may further include at least one second metal oxide represented by $M_aO_c$ (where 0<a≤3, 0<b<4, and when a is 1, 2, or 3, c is an integer). Here, M may be at least one metal selected from Groups 2 to 13, 15, and 16 of the Periodic Table of Elements. For example, the second metal oxide may include the same metal as the first metal oxide, and a ratio of c to a (c/a) of the second metal oxide may be greater than a ratio of b to a (b/a) of the first metal oxide. For example, c/a >b/a. The second metal oxide may be selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. The first metal oxide may be obtained by partial or full reduction of the second metal oxide. Accordingly, the first metal oxide may have a lower oxygen content and a greater oxidation number than the second metal oxide. For example, the shell may include $Al_2O_x$ (where 0<x<3) as the first metal oxide and $Al_2O_3$ as the second metal oxide.

In the composite cathode active material, for example, the carbon-based material included in the shell and the transition metal of the lithium transition metal oxide included in the core are chemically bound through a chemical bond. The carbon atom (C) of the carbon-based material included in the shell and the transition metal (Me) of the lithium transition metal oxide may be, for example, chemically bound through an oxygen atom-mediated C-O-Me bond (e.g., a C-O-Ni bond or a C-O-Co bond). The core and the shell may form a composite through chemical binding between the carbon-based material included in the shell and the lithium transition metal oxide included in the core. In this regard, such a composite may be distinguished from a simple physical mixture of the carbon-based material and the lithium transition metal oxide.

In addition, the first metal oxide included in the shell and the carbon-based material may be also chemically bound through a chemical bond. Here, the chemical bond may be, for example, a covalent bond or an ionic bond. The covalent bond may be, for example, a bond including at least one of an ester group, an ether group, a carbonyl group, an amide group, a carbonate anhydride group, and an acid anhydride group. The ionic bond may be, for example, a bond including a carboxylic acid ion, an ammonium ion, an acyl cation group, and the like.

The thickness of the shell may be, for example, in a range of 1 nm to 5 μm, 1 nm to 1 μm, 1 nm to 500 nm, 1 nm to 200 nm, 1 nm to 100 nm, 1 nm to 90 nm, 1 nm to 80 nm, 1 nm to 70 nm, 1 nm to 60 nm, 1 nm to 50 nm, 1 nm to 40 nm, 1 nm to 30 nm, or 1 nm to 20 nm. When the thickness of the shell is within the ranges above, an increase in the internal resistance of a lithium battery including the composite cathode active material may be suppressed.

The composite cathode active material may further include, for example, a third metal doped on the core or a third metal oxide coated on the core. Then, the shell may be disposed on the doped third metal or the coated third metal oxide. For example, after the third metal is doped on the surface of the lithium transition metal oxide included in the core or the third metal oxide is coated on the surface of the lithium transition metal oxide included in the core, the shell may be disposed on the third metal and/or the third metal oxide. For example, the composite cathode active material may include: the core; an interlayer disposed on the core; and the shell disposed on the interlayer, wherein the interlayer may include the third metal or the third metal oxide. The third metal may be at least one metal selected from Al, Zr, W, and Co, and the third metal oxide may be $Al_2O_3$, $Li_2O$-$ZrO_2$, $WO_2$, CoO, $Co_2O_3$, $Co_3O_4$, and the like.

The shell included in the composite cathode active material may include, for example, at least one selected from: a composite including a first metal oxide, a carbon-based material, such as graphene, and a doped P element; and a milling result of the composite, wherein the first metal oxide may be disposed in a matrix of the carbon-based material, for example, a graphene matrix. The shell may be, for example, prepared by using a composite including the first metal oxide, a carbon-based material such as graphene, and a doped P element. The composite may further include a second metal oxide, in addition to the first metal oxide. The composite may include, for example, at least two types of the first metal oxide. The composite may include, for example, at least two types of the first metal oxide and at least two types of the second metal oxide.

The content of the doped P element included in the composite may be, for example, greater than 0 to 5 at%, and in a range of 0.01 at% to 4 at%, 0.1 at% to 3 at%, 0.1 at% to 2 at%, 0.1 at% to 1.5 at%, or 0.3 at% to 1 at%, based on the total number of atoms in the composite. By doping the composite with the P element having such a content range, the cycle characteristics of a lithium battery including the composite cathode active material including a shell including the composite and/or a milling product thereof may be further improved. The content of the doped P element included in the composite may be obtained from, for example, a peak obtained by measuring an XPS spectrum of the surface of

the composite or the surface of the composite cathode active material coated with the composite.

The content of at least one of the composite and the milling product thereof included in the composite cathode active material may be less than or equal to 3 wt%, less than or equal to about 2 wt%, less than or equal to about 1 wt% or less, less than or equal to about 0.5 wt%, or less than or equal to 0.2 wt%, based on the total weight of the composite cathode active material. The content of at least one of the composite and the milling product may be in a range of 0.01 wt% to 3 wt%, 0.01 wt% to 1 wt%, 0.01 wt% to 0.7 wt%, 0.01 wt% to 0.5 wt%, 0.01 wt% to 0.2 wt%, 0.01 wt% to 0.1 wt%, or 0.03 wt% to 0.07 wt%, based on the total weight of the composite cathode active material. When the composite cathode active material includes at least one of the composite and the milling product thereof in the content within the ranges above, the cycle characteristics of a lithium battery including the composite cathode active material may be further improved.

The average particle diameter of at least one selected from the first metal oxide and the second metal oxide included in the composite may be in a range of 1 nm to 1 μm, 1 nm to 500 nm, 1 nm to 200 nm, 1 nm to 100 nm, 1 nm to 70 nm, 1 nm to 50 nm, 1 nm to 30 nm, 3 nm to 30 nm, 3 nm to 25 nm, 5 nm to 25 nm, 5 nm to 20 nm, 7 nm to 20 nm, or 7 nm to 15 nm. Since the first metal oxide and/or the second metal oxide has a particle diameter within the nanometer ranges above, the first metal oxide and/or the second metal oxide may be more uniformly distributed in a matrix of the carbon-based material of the composite. Accordingly, the composite may be then uniformly coated on the core without agglomeration to form a shell. In addition, when the particle diameter of first metal oxide and/or the second metal oxide is within the ranges above, the first metal oxide and/or the second metal oxide may be more uniformly disposed on the core. Therefore, by uniformly disposing the first metal oxide and/or the second metal oxide on the core, the voltage resistance characteristics of a battery including the composite may be more effectively exhibited.

The average particle diameter of each of the first metal oxide and the second metal oxide may be measured by, for example, a measurement apparatus using a laser diffraction method or a dynamic light scattering method. The average particle diameter may be measured using, for example, a laser scattering particle size distribution meter (e.g., LA-920 of Horiba Ltd.), and is a value of the median particle diameter D50 when the metal oxide particles are accumulated to 50 % from small particles in volume conversion.

The uniformity deviation of at least one selected from the first metal oxide and the second metal oxide included in the composite may be less than or equal to 3 %, less than or equal to 2 %, or less than or equal to 1 %. The uniformity may be obtained by, for example, XPS. Accordingly, at least one selected from the first metal oxide and the second metal oxide may have be uniformly distributed in the composite with the deviation of less than or equal to 3 %, less than or equal to 2 %, or less than or equal to 1 %.

The carbon-based material included in the composite may have, for example, a branched structure, and at least one selected from the first metal oxide and the second metal oxide may be distributed in the branched structure of the metal-based material. The branched structure of the carbon-based material may include, for example, a plurality of carbon-based material particles in contact with one another. When the carbon-based material has such a branched structure, various conducting paths may be provided.

The carbon-based material included in the composite may be, for example, graphene. The graphene may have, for example, a branched structure, and at least one metal oxide selected from the first metal oxide and the second metal oxide may be distributed in the branched structure of the graphene. The branched structure of the graphene may include, for example, a plurality of graphene particles in contact with one another. Since the graphene has such a branched structure, various conducting paths may be provided.

The carbon-based material included in the composite may have, for example, a spherical structure, and at least one metal oxide selected from the first metal oxide and the second metal oxide may be distributed in the spherical structure. The spherical structure of the carbon-based material may have a size in a range of 50 nm to 300 nm. A plurality of the carbon-based material having the spherical structure may be provided. When the carbon-based material has such a spherical structure, the composite may have a rigid structure.

The carbon-based material included in the composite may be, for example, graphene. The graphene may have, for example, a spherical structure, and at least one metal oxide selected from the first metal oxide and the second metal oxide may be distributed in the spherical structure. The spherical structure of the graphene may have a size in a range of 50 nm to 300 nm. A plurality of graphenes having the spherical structure may be provided. When the graphene has such a spherical structure, the composite may have a rigid structure.

The carbon-based material included in the composite may have, for example, a spiral structure in which a plurality of spherical structures are connected to each other, and at least one metal oxide selected from the first metal oxide and the second metal oxide may be distributed in the spherical structure of the spiral structure. The spiral structure of the carbon-based material may have a size in a range of 500 nm to 100 μm. When the carbon-based material has such a spiral structure, the composite may have a rigid structure.

The carbon-based material included in the composite may be, for example, graphene. The graphene may have, for example, a spiral structure in which a plurality of spherical structures are connected, and at least one metal oxide selected from the first metal oxide and the second metal oxide may be distributed in the spherical structure of the spiral

structure. The spiral structure of the graphene may have a size in a range of 500 nm to 100 μm. Since the graphene has such a spiral structure, the composite may have a rigid structure.

The carbon-based material included in the composite may have, for example, a cluster structure in which a plurality of spherical structures are aggregated with each other, and at least one metal oxide selected from the first metal oxide and the second metal oxide may be distributed in the spherical structure of the cluster structure. The cluster structure of the carbon-based material may have a size in a range of 0.5 mm to 10 cm. When the carbon-based material has such a cluster structure, the composite may have a rigid structure.

The carbon-based material included in the composite may be, for example, graphene. The graphene may have, for example, a cluster structure in which a plurality of spherical structures are aggregated, and at least one metal oxide selected from the first metal oxide and the second metal oxide may be distributed in the spherical structure of the cluster structure. The cluster structure of the graphene may have a size in a range of 0.5 mm to 10 cm. Since the graphene has such a cluster structure, the composite may have a rigid structure.

The composite may have, for example, a crumpled faceted-ball structure, and at least one selected from the first metal oxide and the second metal oxide may be distributed inside or on the surface of the structure. Since the composite has such a faceted-ball structure, the composite may be easily coated on the irregular surface unevenness of the core.

The composite may have, for example, a planar structure, and at least one selected from the first metal oxide and the second metal oxide may be distributed inside or on the surface of the structure. Since the composite has such a two-dimensional planar structure, the composite may be easily coated on the irregular surface unevenness of the core.

The carbon-based material included in the composite may extend from the first metal oxide by a distance of less than or equal to about 10 nm, and may include at least 1 to 20 carbon-based material layers. For example, when a plurality of carbon-based material layers are laminated, a carbon-based material having a total thickness of less than or equal to about 12 nm may be disposed on the first metal oxide. For example, the total thickness of the carbon-based material may be in a range of 0.6 nm to 12 nm.

The carbon-based material included in the composite may be, for example, graphene. The graphene may extend from the first metal oxide by a distance of less than or equal to about 10 nm, and may include at least 1 to 20 graphene layers. For example, when a plurality of graphene layers are laminated, graphene having a total thickness of less than or equal to about 12 nm may be disposed on the first metal oxide. For example, the total thickness of graphene may be in a range of 0.6 nm to 12 nm.

The core included in the composite cathode active material may include, for example, a lithium transition metal oxide represented by Formula 1:

Formula 1 $Li_aCo_xM_yO_{2-b}A_b$

In Formula 1,

$1.0 \le a \le 1.2$, $0 \le b \le 0.2$, $0.9 \le x \le 1$, $0 \le y \le 0.1$, and $x+y=1$,
M may be manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B), or a combination thereof, and A may be F, S, Cl, Br, or a combination thereof.

The core included in the composite cathode active material may include, for example, a lithium transition metal oxide represented by one of Formulae 2 to 4:

Formula 2 $LiNi_xCo_yMn_zO_2$

Formula 3 $LiNi_xCo_yAl_zO_2$

wherein, in Formulae 2 and 3, $0.8 \le x \le 0.95$, $0 < y \le 0.2$, $0 < z \le .2$, and $x+y+z=1$,

Formula 4 $LiNi_xCo_yMn_vAl_wO_2$

wherein, in Formula 4, $0.8 \le x \le 0.95$, $0 < y \le 0.2$, $0 < v \le 0.2$, $0 < wr \le 0.2$, and $x+y+v+w=1$.

The lithium transition metal oxide represented by one of Formulae 1 to 4 may include nickel in the content of greater than or equal to about 80 mol%, greater than or equal to about 85 mol%, or greater than or equal to about 90 mol%, based on the total moles of transition metal, and may provide excellent initial capacity and lifespan characteristics at room temperature and at a high temperature.

For example, the nickel content in the lithium transition metal oxide represented by one of Formulae 1 to 4 may

be in a range of 80 mol% to 95 mol%, 85 mol% to 95 mol%, or 90 mol% to 95 mol%, based on the total moles of transition metal.

The core included in the composite cathode active material may include, for example, a lithium transition metal oxide represented by one of Formulae 5 and 6:

Formula 5 $Li_aCo_xM_yO_{2-b}A_b$

wherein, in Formula 5,

$1.0 \leq a \leq 1.2$, $0 \leq b \leq 0.2$, $0.9 \leq x \leq 1$, $0 \leq y \leq 0.1$, and $x+y=1$,
M may be Mn, Nb, V, Mg, Ga, Si, W, Mo, Fe, Cr, Cu, Zn, Ti, Al, B, or a combination thereof, and A may be F, S, Cl, Br, or a combination thereof,

Formula 6 $LiCoO_2$.

Another aspect provides a cathode including the composite cathode active material. By including the composite cathode active material, the cathode may provide improved cycle characteristics and decreased internal resistance.

The cathode may be, for example, prepared according to the following method, but the preparation method thereof is not necessarily limited to the exemplified method and may be adjusted to required conditions.

First, a cathode active material composition is prepared by mixing the aforementioned composite cathode active material, a conductive material, a binder, and a solvent. The prepared cathode active material composition may be directly coated and dried on an aluminum current collector to form a cathode plate provided with a cathode active material layer. Alternatively, a film obtained by casting the cathode active material composition on a separate support and separating it from the support may be laminated on an aluminum current collector to prepare a cathode plate on which the cathode active material layer is formed.

Examples of the conductive material may be: carbon black, graphite particulates, natural graphite, artificial graphite, acetylene black, Ketjen black, carbon fibers; carbon nanotubes; metallic powder, metallic fiber, or metallic tube of copper, nickel, aluminum, silver, and the like; and a conductive polymer such as a polyphenylene derivative. However, embodiments are not limited thereto, and any suitable conductive material available in the art may be used.

Examples of the binder are a vinylidene fluoride/hexafluoropropylene copolymer, polyvinylidene fluoride, polyacrylonitrile, polymethyl methacrylate, polytetrafluoroethylene (PTFE), a mixture of the aforementioned polymers, a styrene butadiene-rubber polymer, and the like, and examples of the solvent are N-methyl pyrrolidone (NMP), acetone, water, and the like. However, embodiments are not limited thereto, and any suitable binder and solvent available in the art may be used.

By further adding a plasticizer or a pore former to the cathode active material composition, pores may be formed inside an electrode plate.

The contents of the composite cathode active material, the conductive material, the binder, and the solvent used in the cathode may be at levels general for use in a lithium battery. Depending on the use and configuration of a lithium battery, one or more of the conductive material, the binder, and the solvent may be omitted.

The content of the binder included in the cathode may be in a range of 0.1 wt% to 10 wt% or 0.1 wt% to 5 wt%, based on the total weight of the cathode active material layer. The content of the composite cathode active material included in the cathode may be in a range of 90 wt% to 99 wt% or 95 wt% to 99 wt%, based on the total weight of the composite cathode active material.

In addition, the cathode may additionally include a general cathode active material other than the aforementioned composite cathode active material.

As the general cathode active material, any suitable lithium-containing metal oxide available in the art may be used without limitation. For example, at least one composite oxide of lithium and a metal selected from Co, Mn, Ni, and a combination thereof may be used, and a specific example thereof may be a compound represented by one of the following formulae: $Li_aA_{1-}2$ (where $0.90 \leq a \leq 1$ and $0 \leq b \leq 0.5$); $Li_aE_{1-b}B_bO_{2-c}D_c$ (where $0.90 \leq a \leq 1$, $0 \leq b \leq 0.5$, and $0 \leq c \leq 0.05$); $LiE_{2-b}B_bO_{4-c}D_c$ (where $0 \leq b \leq 0.5$ and $0 \leq c \leq 0.05$); $Li_aNi_{1-b-c}Co_bB_cD_\alpha$ (where $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, $0 < \alpha \leq 2$); $Li_aNi_{1-b-c}Co_bB_cO_{2-\alpha}F_2$ (where $0.90 \leq a \leq 1$, $0 \leq b \leq 0.5$, $0 \leq c \leq 0.05$, $0 < \alpha < 2$); $Li_aNi_{1-b-c}Mn_bB_cD_\alpha$ (where $0.90 \leq a \leq 1$, $0 \leq b \leq 0.5$, $0 \leq c \leq 0.05$, $0 < \alpha \leq 2$); $Li_aNi_{1-b-c}Mn_bB_cO_{2-a}F_\alpha$ (where $0.90 \leq a \leq 1$, $0 \leq b \leq 0.5$, $0 \leq c \leq 0.05$, $0 < \alpha < 2$); $Li_aNi_{1-b-c}Mn_bB_cO_{2-\alpha}F_2$ (where $0.90 \leq a \leq 1$, $0 \leq b \leq 0.5$, $0 \leq c \leq 0.05$, $0 < \alpha < 2$); $Li_aNi_bE_cG_dO_2$ (where $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$ (where $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (where $0.90 \leq a \leq 1$ and $0.001 \leq b \leq 0.1$); $Li_aCoG_bO_2$ (where $0.90 \leq a \leq 1$ and $0.001 \leq b \leq 0.1$); $Li_aMnG_bO_2$ (where $0.90 \leq a \leq 1$ and $0.001 \leq b \leq 0.1$); $Li_aMn_2G_bO_4$ (where $0.90 \leq a \leq$

1 and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ (where $0 \leq f \leq 2$); $Li_{(3-f)}Fe_2(PO_4)_3$ (where $0 \leq f \leq 2$); and $LiFePO_4$.

In the formulae above representing the compound, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof.

A compound in which a coating layer is additionally provided on the surface of the aforementioned compound may be used, and a mixture of the aforementioned compound and a compound additionally provided with a coating layer may be also used. The coating layer additionally provided on the surface of the aforementioned compound may include, for example, a coating element compound such as oxide of a coating element, hydroxide of a coating element, oxyhydroxide of a coating element, oxycarbonate of a coating element, or hydroxycarbonate of a coating element. The compound constituting the coating layer may be amorphous or crystalline. The coating element included in the coating layer may be Mg, Al, Co, K, Na, Ca, Si, Ti, V, Sn, Ge, Ga, B, As, Zr, or a mixture thereof. A method of forming the coating layer may be selected within a range that does not adversely affect the physical properties of the cathode active material. The coating method may be, for example, spray coating, dipping method, or the like. A detailed description of the coating method will be omitted because it may be well understood by those in the art.

Another aspect provides a lithium battery including the cathode that includes the composite cathode active material.

When the lithium battery includes the cathode including the composite cathode active material, the improved cycle characteristics and improved thermal stability may be provided.

The lithium battery may be, for example, prepared according to the following method, but the preparation method thereof is not necessarily limited to the exemplified method and may be adjusted to required conditions.

First, a cathode is prepared according to the aforementioned preparation method of the cathode.

Next, an anode may be manufactured as follows. The anode may be, for example, prepared in the same manner as in the cathode, except that an anode active material is used instead of the composite cathode active material. In addition, in the anode active material composition, the substantially same conductive material, binder, and solvent used in the cathode preparation may be used.

For example, an anode active material, a conductive material, a binder, and a solvent may be mixed to prepare an anode active material composition. The anode active material composition may be then directly coated on a copper current collector to prepare an anode electrode plate. Alternatively, an anode active material film obtained by casting the anode active material composition on a separate support and separating it from the support may be laminated on a copper current collector to prepare an anode electrode plate.

As the anode active material, any suitable anode active material available in the art for a lithium battery may be used. For example, the anode active material may include at least one selected from lithium metal, a metal alloyable with lithium, a transition metal oxide, a non-transition metal oxide, and a carbon-based material.

Examples of the metal alloyable with lithium are silicon (Si), tin (Sn), aluminum (Al), germanium (Ge), lead (Pb), bismuth (Bi), antimony (Sb), a Si-Y alloy (where Y is an alkali metal, an alkaline earth metal, a Group 13 element, a Group 14 element, a transition metal, a rare earth element, or a combination thereof, and Y is not Si), and a Sn-Y alloy (wherein Y is an alkali metal, an alkaline earth-metal, a Group 13 element, a Group 14 element, a transition metal, a rare earth element, or a combination thereof, and Y is not Sn). The element Y may be, for example, Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may include, for example, a lithium titanium oxide, a vanadium oxide, a lithium vanadium oxide, and the like.

The non-transition metal oxide may be, for example, $SnO_2$, SiOx (where $0<x<2$), and the like.

The carbon-based material may be, for example, crystalline carbon, amorphous carbon, or a mixture thereof. The crystalline carbon may be, for example, amorphous, plate-like, flake-like, spherical, or fibrous graphite, such as natural graphite or artificial graphite. The amorphous carbon may be, for example, soft carbon (carbon sintered at a low temperature) or hard carbon, mesophase pitch carbide, sintered coke, and the like.

The contents of the anode active material, the conductive material, the binder, and the solvent may be at levels general for use in a lithium battery. Depending on the use and configuration of a lithium battery, one or more of the conductive material, the binder, and the solvent may be omitted.

The content of the binder included in the anode may be in a range of 0.1 wt% to 10 wt% or 0.1 wt% to 5 wt%, based on the total weight of the anode active material layer. The content of the conductive material included in the anode may be in a range of 0.1 wt% to 10 wt% or 0.1 wt% to 5 wt%, based on the total weight of the anode active material layer. The content of the anode active material included in the anode may be in a range of 90 wt% to 99 wt% or 95 wt% to 99 wt%, based on the total weight of the anode active material layer. When the anode active material is lithium metal,

the anode may not include a binder and a conductive material.

Next, a separator to be disposed between the cathode and the anode is prepared.

The separator may be any suitable separator commonly used in a lithium battery. The separator may have, for example, low resistance to migration of ions in an electrolyte and have electrolyte solution-retaining ability. The separator may be, for example, glass fiber, polyester, Teflon, polyethylene, polypropylene, polytetrafluoroethylene (PTFE), and a combination thereof, each of which may be in a non-woven fabric form or a woven fabric form. For a lithium-ion battery, a rollable separator including, for example, polyethylene or polypropylene may be used. A separator with a good organic electrolyte solution-retaining ability may be used for a lithium-ion polymer battery.

The separator may be, for example, prepared according to the following example method, but embodiments are not limited thereto, and the method may be controlled according to the required conditions.

First, a separator composition is prepared by mixing a polymer resin, a filler, and a solvent. Then, the separator composition is directly coated on an electrode, and then dried to form a separator. Alternatively, a separator film obtained by casting the separator composition on a support, drying, and separating it from the support may be laminated on an electrode to form a separator.

The polymer used in the separator preparation is not particularly limited, and any suitable polymer available as a binder for an electrode plate may be used. For example, a vinylidene fluoride/hexafluoropropylene copolymer, polyvinylidene fluoride (PVDF), polyacrylonitrile, polymethylmethacrylate, or a mixture thereof may be used.

Next, an electrolyte may be prepared.

The electrolyte may be, for example, an organic electrolyte solution. The organic electrolyte solution may be, for example, prepared by dissolving a lithium salt in an organic solvent.

For use as the organic solvent, any suitable organic solvent available in the art may be used. Examples of the organic solvent are propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyl tetrahydrofuran, γ-butyrolactone, dioxolan, 4-methyl dioxolan, N, N-dimethyl formamide, dimethyl acetamide, dimethyl sulfoxide, dioxane, 1,2-dimethoxyethane, sulfolane, dichloroethane, chlorobenzene, nitrobenzene, diethylene glycol, dimethyl ether, or a mixture thereof.

For use as the lithium salt, any material available in the art as a lithium salt may be used. The lithium salt may be, for example, $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$(where x and y may each be a natural number of 1 to 20), LiCl, LiI, or a mixture thereof.

Alternatively, the electrolyte may be a solid electrolyte. The solid electrolyte may be, for example, boron oxide, lithium oxynitride, and the like, but embodiments are not limited thereto. Any suitable solid electrolyte available in the art may be used. The solid electrolyte may be formed on the anode by a method such as sputtering, or a separate solid electrolyte sheet may be laminated on the anode.

The solid electrolyte may be, for example, an oxide-based solid electrolyte or a sulfide-based solid electrolyte.

The solid electrolyte may be, for example, an oxide-based solid electrolyte. The oxide-based solid electrolyte may include at least one selected from $Li_{1+x+y}Al_xTi_{2-x}Si_yP_{3-y}O_{12}$ (where 0<x<2 and 0≤y<3), $BaTiO_3$, $Pb(Zr,Ti)O_3$(PZT), $Pb_{1-x}La_xZr_{1-y}Ti_yO_3$(PLZT)(where 0≤x<1 and 0≤y<1), $PB(Mg_3Nb_{2/3})O_3$-$PbTiO_3$(PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, $Li_3PO_4$, $Li_xTi_y(PO_4)_3$ (where 0<x<2 and 0<y<3), $Li_xAl_yTi_z(PO_4)_3$ (where 0<x<2, 0<y<1, and 0<z<3), $Li_{1+x+y}(Al, Ga)_x(Ti, Ge)_{2-x}Si_yP_{3-y}O_{12}$ (where 0≤x≤1 and 0≤y≤1), $Li_xLa_yTiO_3$ (where 0<x<2 and 0<y<3), $Li_2O$, LiOH, $Li_2CO_3$, $LiAlO_2$, $Li_2O$-$Al_2O_3$-$SiO_2$-$P_2O_5$-$TiO_2$-$GeO_2$, and $Li_{3+x}La_3M_2O_{12}$ (where M may be Te, Nb, or Zr, and x may be an integer from 1 to 10). The solid electrolyte may be prepared by a sintering method or the like. For example, the oxide-based solid electrolyte may include a garnet-type solid electrolyte selected from $Li_7La_3Zr_2O_{12}$(LLZO) and $Li_{3+x}La_3Zr_{2-a}M_aO_{12}$ (M-doped LLZO)(where M may be Ga, W, Nb, Ta, or Al, and x may be an integer from 1 to 10).

The sulfide-based solid electrolyte may include, for example, lithium sulfide, silicon sulfide, phosphorus sulfide, boron sulfide, or a combination thereof. Particles of the sulfide-based solid electrolyte may include $Li_2S$, $P_2S_5$, $SiS_2$, $GeS_2$, $B_2S_3$, or a combination thereof. The particles of the sulfide-based solid electrolyte particles may include $Li_2S$ or $P_2S_5$. The particles of the sulfide-based solid electrolyte particles are known to have higher lithium ionic conductivity than other inorganic compounds. For example, the sulfide-based solid electrolyte may include $Li_2S$ and $P_2S_5$. When the sulfide solid electrolyte material constituting the sulfide-based solid electrolyte includes $Li_2S$-$P_2S_5$, a mixing molar ratio of $Li_2S$ to $P_2S_5$ may be, for example, in a range of about 50:50 to about 90:10. In addition, an inorganic solid electrolyte prepared by adding $Li_3PO_4$, halogen, a halogen compound, $Li_{2+2x}Zn_{1-x}GeO_4$ ("LISICON", where 0≤x<1), $Li_{3+y}PO_{4-x}N_x$ ("LIPON")(where 0<x<4 and 0<y<3), $Li_{3.25}Ge_{0.25}P_{0.75}S_4$("ThioLISICON"), $Li_2O$-$Al_2O_3$-$TiO_2$-$P_2O_5$("LATP"), or the like to an inorganic solid electrolyte, such as $Li_2S$-$P_2S_5$, $SiS_2$, $GeS_2$, $B_2S_3$, or a combination thereof, may be used as the sulfide solid electrolyte. Non-limiting examples of the sulfide solid electrolyte material are: $Li_2S$-$P_2S_5$; $Li_2S$-$P_2S_5$-LiX (where X may be a halogen element); $Li_2S$-$P_2S_5$-$Li_2O$; $Li_2S$-$P_2S_5$-$Li_2O$-LiI; $Li_2S$-$SiS_2$; $Li_2S$-$SiS_2$-LiI; $Li_2S$-$SiS_2$-LiBr; $Li_2S$-$SiS_2$-LiCl; $Li_2S$-$SiS_2$-$B_2S_s$-LiI; $Li_2S$-$SiS_2$-$P_2S_5$-LiI; $Li_2S$-$B_2S_3$; $Li_2S$ -$P_2S_5$-$Z_mS_n$ (where 0<m<10, 0<n<10, and Z may be Ge, Zn, or

Ga); $Li_2S$-$GeS_2$; $Li_2S$-$SiS_2$-$Li_3PO_4$; and $Li_2S$-$SiS_2$-$Li_pMO_q$ (where 0<p<10, 0<q<10, and M may be P, Si, Ge, B, Al, Ga, or In). In this regard, the sulfide-based solid electrolyte material may be prepared by treating raw starting materials of the sulfide-based solid electrolyte material (e.g., $Li_2S$, $P_2S_5$, etc.) by a melt quenching method, a mechanical milling method, and the like. Also, a calcination process may be performed after the treatment. The sulfide-based solid electrolyte may be amorphous or crystalline, or may be in a mixed state.

As shown in FIG. 2, a lithium battery 1 according to an embodiment includes a cathode 3, an anode 2, and a separator 4. The cathode 3, the anode 2, and the separator 4 may be wound or folded to be accommodated in a battery case 5. Then, the battery case 5 may be filled with an organic electrolyte solution, and sealed with a cap assembly 6, thereby completing the manufacture of the lithium battery 1. The battery case 5 may be cylindrical, but the shape of the battery case 5 is not necessarily limited thereto. For example, the battery case 5 may be a square-type, a thin-film type, or the like.

The pouch-type lithium battery may include at least one battery assembly. The separator 4 may be disposed between the cathode 3 and the anode 2 to form a battery assembly. The battery assembly may be laminated as a bi-cell structure, impregnated with an organic electrolyte solution, and accommodated and sealed in a pouch to complete the manufacture of a pouch-type lithium battery.

A plurality of lithium batteries may be stacked to form a battery module and/or a battery pack, and such a battery module and/or battery pack may be used in all devices requiring high capacity and high output. For example, the battery pack module and/or battery pack may be used in a laptop computer, a smart phone, an electronic vehicle, or the like.

A lithium battery using a solid electrolyte may be a solid battery or an all-solid battery. A lithium battery using a solid electrolyte may additionally include a solid electrolyte in at least one of the cathode 3 and the anode 2. For example, in a lithium battery in which an electrolyte layer including a sulfide-based solid electrolyte is disposed between the cathode 3 and the anode 2, at least one of the cathode 3 and the anode 2 may include a sulfide-based solid electrolyte.

Since lithium batteries have excellent lifespan characteristics and high rate characteristics, the lithium batteries may be used, for example, in electric vehicles (EVs) and energy storage systems (ESSs). For example, the lithium batteries may be used in hybrid vehicles, such as plug-in hybrid electric vehicles (PHEVs). In addition, the lithium batteries may be applicable to the fields requiring high-power storage. For example, the lithium batteries may be used in electric bicycles, power tools, or the like.

Another aspect provides a method of preparing a composite cathode active material, the method including: providing a lithium transition metal oxide; providing a composite; and mechanically milling the lithium transition metal oxide and the composite, wherein the composite includes: at least one first metal oxide represented by Formula $M_aO_b$ (where 0<a≤3, 0<b<4, when a is 1, 2, or 3, and b is not an integer); a carbon-based material; and a doped P element, the at least one first metal oxide is disposed in a matrix of the cathode active material, and M is at least one metal selected from Groups 2 to 13, 15, and 16 of the Periodic Table of Elements. In the mechanically milling process, the milling method is not particularly limited, and any method capable of directly contacting the lithium transition metal oxide and the composite by using a machine available in the art may be used.

Then, a lithium transition metal oxide may be provided. The lithium transition metal oxide may be, for example, the compound represented by one of Formulae 1 to 6.

The providing of the composite may include, for example: providing an undoped composite by supplying reaction gas consisting of carbon source gas to a structure including a metal oxide and heat-treating the structure; and preparing a composite by mixing the undoped composite with a P-containing compound and performing heating thereon.

The providing of the composite may include, for example, preparing an undoped composite by supplying reaction gas consisting of carbon source gas to at least one of second metal oxide represented by $M_aO_c$ (where 0<a≤3, 0<c<4, and when a is 1, 2, or 3, b is an integer) and heat-treating the at least one second metal oxide, wherein M may be at least one metal selected from Groups 2 to 13, 15, and 16 of the Periodic Table of Elements.

The carbon source gas may include a compound represented by Formula 7, or may be mixed gas including at least one selected from the group consisting of a compound represented by Formula 7, a compound represented by Formula 8, and oxygen-containing gas represented by Formula 9:

Formula 7 $CnH_{(2n+2-a)}[OH]_a$

wherein, in Formula 7, n may be an integer from 1 to 20, and a may be 0 or 1;

Formula 8 $CnH_{2n}$

wherein, in Formula 8, n may be an integer from 2 to 6; and

Formula 9 $C_xH_yO_z$

wherein, in Formula 9, x may be 0 or an integer from 1 to 20, y may be 0 or an integer from 1 to 20, and z may be 1 or 2.

The compound represented by Formula 7 and the compound represented by Formula 8 may be at least one selected from the group consisting of methane, ethylene, propylene, methanol, ethanol, and propanol. The oxygen-containing gas represented by Formula 9 may include, for example, carbon dioxide ($CO_2$), carbon monoxide (CO), water vapor ($H_2O$), or a mixture thereof.

Following the providing of the reaction gas consisting of the carbon source gas to the second metal oxide represented by $M_aO_c$ (where 0<a≤3, 0<c≤4, and when a is 1, 2, or 3, c is an integer) and heat-treating the second metal oxide, a cooling process may be further performed by using at least one inert gas selected from the group consisting of nitrogen, helium, and argon. The cooling process refers to adjusting the reaction temperature to room temperature (20 °C to 25 °C). The carbon source gas may include at least one inert gas selected from the group consisting of nitrogen, helium, and argon.

In the preparation method of the composite, a process of growing a carbon-based material, e.g., graphene, may be performed under various conditions depending on a gas reaction.

According to a first condition, for example, methane may be provided first to a reactor, in which the second metal oxide represented by $M_aO_c$ (where 0<a≤3 and 0<c≤4, and when a is 1, 2, or 3, c is an integer) is disposed, and the reaction temperature may be raised to a heat treatment temperature T. The time required for raising the reaction temperature to the heat treatment temperature T may be in a range of 10 minutes to 4 hours, and the heat treatment temperature T may be in a range of 700 °C to 1100 °C. The heat treatment may be performed during the reaction time at the heat treatment temperature T. The reaction time may be, for example, in a range of 4 hours to 8 hours. The heat-treated product may be cooled to room temperature to prepare a composite. The time required for lowering the reaction temperature from the heat treatment temperature T to the room temperature may be, for example, in a range of 1 hour to 5 hours.

According to a second condition, for example, hydrogen may be provided first to a reactor, in which the second metal oxide represented by $M_aO_c$ (where 0<a≤3 and 0<c≤4, and when a is 1, 2, or 3, c is an integer) is disposed, and the reaction temperature may be raised to the heat treatment temperature T. The time required for raising the reaction temperature to the heat treatment temperature T may be in a range of 10 minutes to 4 hours, and the heat treatment temperature T may be in a range of 700 °C to 1100 °C. After the heat treatment is performed at the heat treatment temperature T for a predetermined reaction time, methane gas may be supplied, and the heat-treatment may be performed for the residual reaction time. The reaction time may be, for example, in a range of 4 hours to 8 hours. The heat-treated product may be cooled to room temperature to prepare a composite. In the cooling process, nitrogen may be provided thereto. The time required for lowering the reaction temperature from the heat treatment temperature T to the room temperature may be, for example, in a range of 1 hour to 5 hours.

According to a third condition, for example, hydrogen may be provided first to a reactor, in which the second metal oxide represented by $M_aO_c$ (where 0<a≤3 and 0<c≤4, and when a is 1, 2, or 3, c is an integer) is disposed, and the reaction temperature may be raised to the heat treatment temperature T. The time required for raising the reaction temperature to the heat treatment temperature T may be in a range of 10 minutes to 4 hours, and the heat treatment temperature T may be in a range of 700 °C to 1100 °C. After the heat treatment is performed at the heat treatment temperature T for a predetermined reaction time, mixed gas of methane and hydrogen may be supplied, and the heat-treatment may be performed for the residual reaction time. The reaction time may be, for example, in a range of 4 hours to 8 hours. The heat-treated product may be cooled to room temperature to prepare a composite. In the cooling process, nitrogen may be provided thereto. The time required for lowering the reaction temperature from the heat treatment temperature T to the room temperature may be, for example, in a range of 1 hour to 5 hours.

In the preparation of the composite, when the carbon source gas includes water vapor, the composite having excellent conductivity may be obtained. The content of water vapor in the gas mixture is not limited, and may be, for example, in a range of 0.01 vol% to 10 vol% based on 100 vol% of the total carbon source gas. The carbon source gas may be: for example, methane; mixed gas including methane and inert gas; or mixed gas including methane and oxygen-containing gas.

The carbon source gas may be: for example, methane; mixed gas including methane and carbon dioxide; or mixed gas including methane, carbon dioxide, and water vapor. The molar ratio of methane and carbon dioxide in the mixed gas of methane and carbon dioxide may be in a range of about 1:0.20 to about 1:0.50, about 1:0.25 to about 1:0.45, or about 1:0.30 to about 1:0.40. The molar ratio of methane and carbon dioxide and water vapor in the mixed gas of methane and carbon dioxide and water vapor may be in a range of about 1:0.20 to about 0.50:0.01 to 1.45, about 1:0.25 to about 0.45:0.10 to 1.35, or about 1:0.30 to about 0.40:0.50 to 1.0.

The carbon source gas may be, for example, carbon monoxide or carbon dioxide. The carbon source gas may be, for example, mixed gas of methane and nitrogen. The molar ratio of methane and nitrogen in the mixed gas of methane and nitrogen may be in a range of about 1: 0.20 to about 1: 0.50, about 1: 0.25 to about 1: 0.45, or about 1: 0.30 to about 1: 0.40. The carbon source gas may not include inert gas such as nitrogen.

The heat treatment pressure may be selected in consideration of the heat treatment temperature, the composition of the gas mixture, and the desired coating amount of carbon. The heat treatment pressure may be controlled by adjusting the amount of the inflowing gas mixture and the amount of the outflowing gas mixture. The heat treatment pressure may be, for example, greater than or equal to 0.5 atm, greater than or equal to 1 atm, greater than or equal to 2 atm, greater than or equal to 3 atm, greater than or equal to 4 atm, or greater than or equal to 5 atm.

The time for the heat treatment time is not particularly limited, and may be selected in consideration of the heat treatment temperature, the heat treatment pressure, the composition of the gas mixture, and the desired coating amount of carbon. For example, the reaction time at the heat treatment temperature may be, for example, in a range of 10 minutes to 100 hours, 30 minutes to 90 hours, or 50 minutes to 40 hours. For example, as time for the heat treatment increases, the content of graphene deposited increases, and thus the electrical properties of the composite may be improved. However, such a trend may not necessarily be directly proportional to the time. For example, after a predetermined period of time, the deposition of carbon, e.g., graphene, may no longer occur, or the deposition rate of graphene may be lowered.

Through a gas phase reaction of the aforementioned carbon source gas, even at a relatively low temperature, an undoped composite may be obtained by providing uniform coating of the carbon-based material, e.g., coating of graphene, to at least one selected from the second metal oxide represented by $M_aO_c$ (where $0<a\leq3$, $0<c\leq4$, when a is 1, 2, or 3, c is not an integer) and a reduction product thereof that is the first metal oxide represented by $M_aO_b$ (where $0<a\leq3$, $0<b<4$, a is 1, 2, or 3, and b is not an integer).

The undoped composite may include: for example, a matrix of the carbon-based material, such as a graphene matrix, having at least one structure selected from a spherical structure, a spiral structure in which a plurality of spherical structures are connected, a cluster structure in which a plurality of spherical structures are aggregated, and a sponge structure; and at least one selected from the first metal oxide represented by $M_aO_b$ (wherein $0<a\leq3$, $0<b<4$, when a is 1, 2, or 3, b is not an integer) and the second metal oxide represented by $M_aO_c$ (wherein $0<a\leq3$, $0<c\leq4$, and when a is 1, 2, or 3, c is an integer) disposed in the matrix of the carbon-based material.

Next, the undoped composite and the P-containing compound may be mixed and then heat-treated, to prepare a P-doped composite.

For example, the undoped composite and the P-containing compound may be mixed in a solvent and then heat-treated after the solvent is removed, to prepare a P-doped composite. By the heat treatment, the composite may be doped with the P element included in the P-containing compound.

The heat treatment may be, for example, performed in an inert atmosphere. The inert atmosphere may be, for example, a nitrogen atmosphere, an argon atmosphere, or the like, but is not limited thereto. Any inert atmosphere available in the art may be used.

The temperature for the heat treatment is not particularly limited as long as it is a temperature at which the P-containing compound is pyrolyzed and P can be doped on the composite. The temperature for the heat treatment may be, for example, in a range of 700 °C to 1,200 °C, 700 °C to 1,100 °C, 800 °C to 1,100 °C, or 900 °C to 1,100 °C.

The time for the heat treatment is not particularly limited as long as it is a time for which the P-containing compound is pyrolyzed and P can be doped on the composite. The time for the heat treatment may be, for example, in a range of 0.5 hours to 5 hours.

The P-containing compound is not particularly limited as long as it is a compound containing a P atom, and may be a P-containing organic compound or a P-containing inorganic compound.

The P-containing compound may be, for example, a compound represented by one of Formulae 6 and 7:

Formula 6

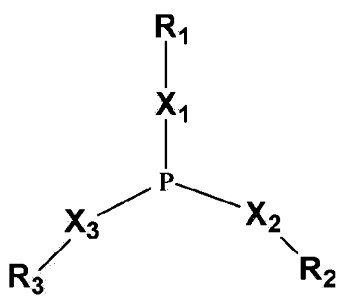

Formula 7

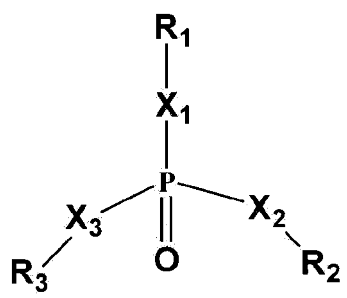

wherein, in the formulae above,

$X_1$, $X_2$, and $X_3$ may each independently be a covalent bond, O, S, or $NR_4$, and
$R_1$, $R_2$, $R_3$, and $R_4$ may each independently be a C1-C10 alkyl group unsubstituted or substituted with a halogen,

a C1-C10 cyanoalkyl group unsubstituted or substituted with a halogen, a C2-C10 alkenyl group unsubstituted or substituted with a halogen, a C5-C20 aryl group unsubstituted or substituted with a halogen, a C2-C20 heteroaryl group unsubstituted or substituted with a halogen, or $-Si(R_5)(R_6)(R_7)$, wherein $R_5$, $R_6$, and $R_7$ may each independently be a C1-C5 alkyl group.

The P-containing compound may be, for example, triphenyl phosphine, triphenyl phosphine oxide, triphenyl phosphate, triphenyl phosphite, or the like.

Next, the lithium transition metal oxide and the composite may be mechanically milled. For the milling, a Nobilta mixer or the like may be used. The number of revolutions of the mixer during milling may be, for example, in a range of 1,000 rpm to 2,500 rpm. When the milling speed is less than 1,000 rpm, the shear force applied to the lithium transition metal oxide and the composite is weak, and thus a chemical bond may be difficult to form between the lithium transition metal oxide and the composite. When the milling speed is significantly high, the composite may be uniformly coated on the lithium transition metal oxide as the complexation is performed in an excessively short time, and thus a uniform and continuous shell may be difficult to form. The milling time may be, for example, in a range of 5 minutes to 100 minutes, 5 minutes to 60 minutes, or 5 minutes to 30 minutes. When the milling time is significantly short, the composite may be uniformly coated on the lithium transition metal oxide, and thus a uniform and continuous shell may be difficult to form. When the milling time is significantly long, the production efficiency may decrease. The content of the composite may be less than or equal to 3 wt%, less than or equal to 2 wt%, or less than or equal to 1 wt%, based on the total weight of the lithium transition metal oxide and the composite. The content of the composite may be, for example, in a range of 0.01 wt% to 3 wt%, 0.1 wt% to 2 wt%, or 0.1 wt% to 1 wt%, based on the total weight of the lithium transition metal oxide and the composite. For example, the content of the composite may be, based on 100 parts by weight of the mixture of the lithium transition metal oxide and the composite, in a range of 0.01 parts by weight to 3 parts by weight, 0.1 parts by weight to 3 parts by weight, 0.1 parts by weight to 2 parts by weight, or 0.1 parts by weight to 1 parts by weight.

The average particle diameter D50 of the composite used for the mechanical milling of the lithium transition metal oxide and the composite may be, for example, in a range of 1 μm to 20 μm, 3 μm to 15 μm, or 5 μm to 10 μm.

In the present specification, a and b of the expression "Ca-Cb" refer to the number of carbon atoms of a specific functional group. That is, the functional group may include a to b carbon atoms. For example, the term "C1-C4 alkyl group" refers to an alkyl group having 1 to 4 carbon atoms, and examples thereof are $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

The nomenclature for a particular radical may include mono-radical or di-radical, depending on the context. For example, when a substituent requires two linkages to the rest of the molecule, the substituent should be understood as a diradical. For example, a substituent specified for an alkyl group requiring two linkages includes a diradical, such as $-CH_2$-, $-CH_2CH_2$-, $-CH_2CH(CH_3)CH_2$-, and the like. The nomenclature for other radicals, such as "alkylene" clearly indicate that the radical is a diradical.

In this specification, the term "alkyl group" or "alkylene group" refers to a branched or unbranched aliphatic hydrocarbon group. In an embodiment, the alkyl group may be substituted or unsubstituted. Examples of the alkyl group are a methyl group, an ethyl group, a propyl group, an isopropyl group, a butyl group, an isobutyl group, a tert-butyl group, a pentyl group, a hexyl group, a cyclopropyl group, a cyclopentyl group, a cyclohexyl group, a cycloheptyl group, and the like, but embodiments are not limited thereto. Each of these substituents may be selectively substituted or unsubstituted. In an embodiment, the alkyl group may include 1 to 4 carbon atoms. Examples of the C1-C5 alkyl group are methyl, ethyl, propyl, isopropyl, butyl, iso-butyl, sec-butyl, pentyl, 3-pentyl, and the like, but embodiments are not limited thereto.

In this specification, the term "cyanoalkyl group" refers to an alkyl group linked with a cyano group. For example, the cyanoalkyl group refers to cyanomethyl, cyanobutyl, cyanopentyl, or the like.

In this specification, the term "alkenyl group" refers to a hydrocarbon group having at least one carbon-carbon double bond and 2 to 20 carbon atoms, and examples thereof are an ethenyl group, a 1-propenyl group, a 2-propenyl group, a 2-methyl- 1-propenyl group, a 1-butenyl group, a 2-butenyl group, a cyclopropenyl group, a cyclopentenyl group, a cyclohexenyl group, a cycloheptenyl group, and the like, but embodiments are not limited thereto. In an embodiment, the alkenyl group may be substituted or unsubstituted. In an embodiment, the alkenyl group may include 2 to 40 carbon atoms.

In the present specification, the term "aromatic" refers to a ring or a ring system having a conjugated pi electron system, and examples thereof are a carbocyclic aromatic groups (e.g., a phenyl group) and a heterocyclic aromatic group (e.g., pyridine). The term includes a monocyclic or fused polycyclic ring (i.e., a ring that shares adjacent pairs of atoms) as long as the entire ring system is aromatic.

In the present specification, the term "aryl group" refers to an aromatic ring or ring system in which the ring backbone includes only carbon atoms (i.e., two or more fused rings sharing two adjacent carbon atoms). When the aryl group is a ring system, each ring in the system is aromatic. For example, the aryl group may be a phenyl group, a biphenyl group, a naphtyl group, a phenanthrenyl group, a naphthacenyl group, or the like, but embodiments are not

limited thereto. The aryl group may be substituted or unsubstituted.

In the present specification, the term "heteroaryl group" refers to an aromatic ring system having one ring or multiple fused rings, wherein at least one ring atom is a hetero atom that is not carbon. In a fused ring system, one or more heteroatoms can be present in only one ring. For example, the heteroatom may include oxygen, sulfur, and nitrogen, but is not necessarily limited thereto. For example, the heteroaryl group may be a furanyl group, a thienyl group, an imidazolyl group, a quinazolinyl group, a quinolinyl group, an isoquinolinyl group, a quinoxalinyl group, a pyridinyl group, a pyrrolyl group, an oxazolyl group, an indolyl group, or the like, but embodiments are not limited thereto.

In this specification, the term "halogen" refers to a stable element belonging to Group 17 of the Periodic Table of Elements, and for example, may be fluorine, chlorine, bromine or iodine, and particularly may be fluorine and/or chlorine.

Mode for Invention

The present disclosure is in greater details through Examples and Comparative Examples below. However, the following embodiments are for illustrative purpose only and shall not be construed as limiting the scope of the disclosure.

Preparation of composite

Reference Preparation Example 1: Undoped $Al_2O_3$@Gr composite

$Al_2O_3$ particles (average particle diameter: about 20 nanometers (nm)) were placed in a reactor, and then the temperature inside the reactor was raised to 1,000 °C under the condition that $CH_4$ was supplied into the reactor at about 300 standard cubic centimeters per minute (sccm) and about 1 atmosphere (atm) for about 30 minutes.

Subsequently, heat treatment was performed thereon while maintaining the temperature same for 7 hours. Then, the temperature inside the reactor was adjusted to room temperature (20 °C to 25 °C) to obtain an undoped composite in which $Al_2O_3$ particles and $Al_2O_z$ (where 0<z<3) particles as a reduction product of the $Al_2O_3$ particles were embedded in a carbon-based material.

Here, the content of alumina included in the undoped composite was 60 wt%. Preparation Example 1: P-doped $Al_2O_3$@Gr composite 5 g of the composite of Reference Preparation Example 1 and 2 g of triphenyl phosphine (TPP) were added to 100 ml of ethanol, and the mixed solution was stirred at room temperature. After removing ethanol by evaporation, the resulting mixture was dried in an oven at 150 °C for 24 hours, put into a reactor under nitrogen atmosphere, and then heat-treated at 1000 °C for 1 hour. Subsequently, the temperature inside the reactor was adjusted to room temperature (20 °C to 25 °C) to obtain a composite doped with a P element. By the heat treatment at a high temperature described above, the P element was doped on the composite.

(Preparation of composite cathode active material)

Example 1: P-doped $Al_2O_3$@Gr composite coated with 0.4 wt% (alumina 0.24 wt%) NCA91

$LiNi_{0.91}Co_{0.05}Al_{0.04}O_2$ (hereinafter, referred to as NCA91) and the composite of Preparation Example 1 were milled by using a Nobilta mixer (manufactured by Hosokawa, Japan) at a rotational speed in a range of about 1,000 rpm to about 2,000 rpm for about 5 minutes to about 30 minutes, so as to obtain a composite cathode active material.

The mixing weight ratio of NCA to the composite of Preparation Example 1 was 99.6:0.4.

Example 2: P-doped $Al_2O_3$@Gr composite coated with 0.25 wt% NCA91

A composite cathode active material was prepared in the same manner as in Example 1, except that the mixing weight ratio of NCA91 to the composite of Preparation Example 1 was changed to 99.75:0.25.

Example 3: P-doped $Al_2O_3$@Gr composite coated with 0.1 wt% NCA91

A composite cathode active material was prepared in the same manner as in Example 1, except that the mixing weight ratio of NCA91 to the composite of Preparation Example 1 was changed to 99.9:0.1.

Example 4: P-doped $Al_2O_3$@Gr composite coated with 1.0 wt% NCA91

A composite cathode active material was prepared in the same manner as in Example 1, except that the mixing weight ratio of NCA91 to the composite of Preparation Example 1 was changed to 99.0:1.0.

Comparative Example 1: Bare NCA91

NCA91 was used as a cathode active material as it is.

Reference Example 1: Undoped $Al_2O_3$@Gr composite coated with 0.4 wt% NCA91

A composite cathode active material was prepared in the same manner as in Example 1, except that the undoped $Al_2O_3$@Gr composite of Reference Preparation Example 1 was used instead of the P-doped $Al_2O_3$@Gr composite of Preparation Example 1.

(Manufacture of lithium battery (half-cell))

Example 5

(Manufacture of cathode)

A mixture of the composite cathode active material of Example 1, a carbon conductive material (e.g., Denka Black), and polyvinylidenefluoride (PVdF) mixed at a weight ratio of 96:2:2 was mixed with N-methyl pyrrolidone (NMP) in an agate mortar to prepare a slurry.

The slurry was bar-coated on an aluminum current collector having a thickness of 15 μm, dried at room temperature, further dried in vacuum at 120 °C, and rolled and punched to prepare a cathode plate having a thickness of 55 μm.

The loading level of the electrode was 10.5 mg/cm$^2$, and the mixture density of the electrode was 3.6 g/cc.

(Manufacture of coin cell)

Each coin cell was prepared by using the cathode plate prepared above, a lithium metal as a counter electrode, a PTFE separator, and a solution in which 1.15 M $LiPF_6$ and 1.5 wt% of vinylene carbonate (VC) were dissolved in ethylene carbonate (EC) + ethyl methyl carbonate (EMC) + dimethyl carbonate (DMC) (at a volume ratio of 2:4:4) as an electrolyte.

Examples 6 to 8

Each coin cell was prepared in the same manner as in Example 5, except that the composite cathode active material of each of Examples 2 to 4 was used instead of the composite cathode active material of Example 1.

Comparative Example 2

A coin cell was prepared in the same manner as in Example 5, except that the composite cathode active material of Comparative Example 1 was used instead of the composite cathode active material of Example 1.

Reference Example 2

A coin cell was prepared in the same manner as in Example 5, except that the composite cathode active material of Reference Example 1 was used instead of the composite cathode active material of Example 1.

Evaluation Example 1: XPS spectrum evaluation

In the process of preparing the undoped composite of Reference Preparation Example 1, XPS spectra were measured by using Qunatum 2000 (Physical Electronics) over time. Before heating, XPS spectra of C 1s orbitals and Al 2p orbitals of samples were measured after 1 minute, after 5 minutes, after 30 minutes, after 1 hour, and after 4 hours, respectively. At the initial heating, the peak for the Al 2p orbital appeared, and the peak for the C 1s orbital did not appear. After 30 minutes, the peak for the 1s orbital appeared clearly, and the size of the peak for the Al 2p orbital significantly reduced.

After 30 minutes, near 284.5 electronvolt (eV), peaks for C 1s orbitals appeared clearly due to C-C bonds and C=C bonds due to graphene growth.

As reaction time elapsed, the oxidation number of aluminum decreased, and thus the peak position of the Al 2p orbital was shifted toward a lower binding energy (eV).

Accordingly, it was confirmed that, as the reaction proceeded, graphene was grown on $Al_2O_3$ particles, and

$Al_2O_x$ (where 0<x<3), which is a reduction product of $Al_2O_3$, was produced.

The average contents of carbon and aluminum were measured through XPS analysis results in 10 regions of the composite sample prepared in Reference Preparation Example 1. With respect to the measurement results, a deviation of the aluminum content for each region was calculated. The deviation of the aluminum content was expressed as a percentage of the average value, and this percentage was referred to as uniformity. The percentage of the average value of the deviation of the aluminum content, that is, the uniformity of the aluminum content was 1 %. Therefore, it was confirmed that alumina was uniformly distributed in the composite prepared in Reference Preparation Example 1.

Evaluation Example 2: XPS spectrum evaluation

XPS spectra of the undoped composite of Reference Preparation Example 1 and the doped composite of Preparation Example 1 are each shown in FIG. 1.

As shown in FIG. 1, the doped composite of Preparation Example 1 additionally showed a peak for the P element. Accordingly, it was confirmed that the doped composite of Preparation Example 1 was doped with the P element.

In contrast, the undoped composite of Reference Preparation Example 1 did not show a peak for the P element.

The contents of elements obtained from the XPS spectra of the undoped composite of Reference Preparation Example 1 and the doped composite of Preparation Example 1 are shown in Table 1.

Table 1

| | Reference Preparation Example 1 [at%] | Preparation Example 1 [at%] |
|---|---|---|
| C 1s | 87.2 | 86.9 |
| O 1s | 7.0 | 6.5 |
| Al 2p | 5.8 | 5.9 |
| P 2p | - | 0.7 |

As shown in Table 1, the undoped composite of Reference Preparation Example 1 did not include the P element. In contrast, the P element of the P-doped composite of Preparation Example 1 was 0.7 at%.

Evaluation Example 3: SEM, HR-TEM, and SEM-EDAX analysis

Regarding the undoped composite of Reference Preparation Example 1, the P-doped composite of Preparation Example 1, the composite cathode active material of Example 1, and the bare NCA of Comparative Example 1, scanning electron microscopy, high-resolution transmission electron microscopy, and EDAX analysis were performed.

For the SEM-EDAX analysis, FEI Titan 80-300 available from Philips Company was used.

The undoped composite of Reference Preparation Example 1 showed a structure in which $Al_2O_3$ particles and $Al_2O_z$ (where 0<z<3) particles as a reduction product of the $Al_2O_3$ particles were embedded in graphene. It was confirmed that the graphene layer was disposed on the outer surface of at least one particle selected from $Al_2O_3$ and $Al_2O_z$ particles (where 0<z<3). The at least one particle selected from $Al_2O_3$ and $Al_2O_z$ particles (where 0<z<3) were uniformly distributed in the graphene matrix. The at least one particle selected from $Al_2O_3$ and $Al_2O_z$ particles (where 0<z<3) had a particle diameter of about 20 nm. The undoped composite of Reference Preparation Example 1 had a particle diameter in a range of about 100 nm to about 200 nm. The P-doped composite of Preparation Example 1 also had substantially the same structure and particle diameter as the composite of Reference Preparation Example 1.

It was confirmed that a shell formed by a composite including P-doped graphene was disposed on the NCA core of the composite cathode active material of Example 1.

The SEM-EDAX analysis was performed on the bare NCA of Comparative Example 1 and the composite cathode active material of Example 1.

It was confirmed that the concentration of aluminum (Al) distributed on the surface of the composite cathode active material of Example 1 increased compared to the surface of the bare NCA composite cathode active material of Comparative Example 1.

Therefore, it was confirmed that a shell was formed by uniformly coating the NCA core with the P-doped composite of Preparation Example 1 in the composite cathode active material of Example 1.

Evaluation Example 4: Charge/discharge characteristics evaluation at room temperature (25 °C)

Each of the lithium batteries prepared in Examples 5 to 8, Comparative Example 2, and Reference Example

2 was charged with a constant current of 0.1 C rate at 25 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 25 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) ($1^{st}$ cycle). This cycle was repeated (100 times) until the $100^{th}$ cycle under the same conditions.

In all charge/discharge cycles, a 10-minute stop time was provided after every one charge/discharge cycle. Some of the results of the charge/discharge test at room temperature are shown in Table 2. The initial efficiency is defined by Equation 1:

Equation 1

$$\text{Initial efficiency [\%]}=[\text{discharge capacity in formation cycle}/\text{charge capacity in formation cycle}]\times 100$$

Table 2

| | Initial efficiency [%] |
|---|---|
| Example 5: P-doped $Al_2O_3$@Gr composite 0.4 wt% coating/NCA91 core | 88.0 |
| Comparative Example 2: Bare NCA91 (no coating) | 88.0 |
| Reference Example 2: Undoped $Al_2O_3$@Gr composite 0.4 wt% coating/NCA91 core | 87.7 |

As shown in Table 2, the lithium battery of Example 5 exhibited initial efficiency equal to that of the lithium battery of Comparative Example 2, and improved initial efficiency compared to that of Reference Example 2.

Evaluation Example 5: Evaluation of charge and discharge characteristics at high temperature (45 °C)

Each of the lithium batteries prepared in Examples 5 to 8, Comparative Example 2, and Reference Example 2 was charged with a constant current of 0.1 C rate at 45 °C until a voltage reached 4.4 voltage (V) (vs. Li), and was then cut-off at a current of 0.05 C rate while maintaining the voltage at 4.4 V in a constant voltage mode. Subsequently, each of the lithium batteries was discharged at a constant current of 0.1 C rate until the voltage reached 2.8 V (vs. Li) (formation cycle).

Each of the lithium batteries having undergone the formation cycle was charged with a constant current of 0.2 C rate at 45 °C until a voltage reached 4.4 V (vs. Li), and was then cut-off at a current of 0.05 C rate while maintaining the voltage at 4.4 V in a constant voltage mode. Subsequently, each of the lithium batteries was discharged at a constant current of 0.2 C rate until the voltage reached 2.8 V (vs. Li) ($1^{st}$ cycle). This cycle was repeated (100 times) until the $100^{th}$ cycle under the same conditions.

In all charge/discharge cycles, a 10-minute stop time was provided after every one charge/discharge cycle. Some of the results of the charge/discharge test at high temperatures are shown in Table 3. The capacity retention rate at the $100^{th}$ cycle is defined by Equation 2:

Equation 2

$$\text{Capacity retention (\%)}=(\text{discharge capacity in }100^{th}\text{ cycle}/\text{discharge capacity in }1^{st}\text{ cycle})\times 100$$

Evaluation Example 6: Evaluation of direct current internal resistance (DR-IR) before/after charging and discharging at high temperature

With respect to the lithium batteries of Examples 5 to 8, Comparative Example 2, and Reference Example 2,

before the evaluation of charging and discharging at a high temperature and after the evaluation of charging and discharging at a high temperature, the DC-IR was measured by the following method, respectively:

after charging to a voltage of 50 % of the state of charge with a current density of 0.5 C in the 1st cycle, a 10-minute resting time was provided after cut-off at 0.02 C;
after discharging at a constant current of 0.5 C for 30 seconds, a 10-minute resting time was provided after charging with a constant current of 0.5 C for 30 seconds;
after discharging at a constant current of 1.0 C for 30 seconds, a 10-minute resting time was provided after charging with a constant current of 0.5 C for 1 minute;
after discharging at a constant current of 2.0 C for 30 seconds, a 10-minute resting time was provided after charging with a constant current of 0.5 C for 2 minutes; and
after discharging at a constant current of 3.0 C for 30 seconds, a 10-minute resting time was provided after charging with a constant current of 0.5 C for 3 minutes.

From a ratio of average voltage change (ΔV) and average current change (ΔI) during discharging at a constant current at each C-rate, the DC-IR (where $R=\Delta V/\Delta I$) was calculated, and an average value thereof was used as a measured value.

Some of the measured DC-IR before the evaluation of charging and discharging at a high temperature and the DC-IR measurement results after the evaluation of charging and discharging at a high temperature are shown in Table 3.

Table 3

| | Capacity at high temperature Retention rate [%] | Initial DC-IR [ohm] | DC-IR after 100 cycles [ohm] |
|---|---|---|---|
| Example 5: P-doped $Al_2O_3$@Gr composite 0.4 wt% coating/NCA91 core | 82.5 | 4.0 | 8.6 |
| Example 6: P-doped $Al_2O_3$@Gr composite 0.25 wt% coating/NCA91 core | 75.4 | 4.0 | 14.8 |
| Example 7: P-doped $Al_2O_3$@Gr composite 0.1 wt% coating/NCA91 core | 68.3 | 4.1 | 25.6 |
| Example 8: P-doped $Al_2O_3$@Gr composite 1.0 wt% coating/NCA91 core | 80.2 | 5.2 | 10.9 |
| Comparative Example 2: Bare NCA91 (no coating) | 63.4 | 4.1 | 39.4 |
| Reference Example 2: Undoped $Al_2O_3$@Gr composite 0.4 wt% coating/NCA91 core | 80.4 | 4.2 | 9.9 |

As shown in Table 3, the lithium batteries of Examples 5 to 8 had significantly improved lifespan characteristics at a high temperature compared to the lithium battery of Comparative Example 2. In addition, the lithium batteries of Examples 5 to 8 significantly suppressed the increase in DC internal resistance after charge/discharge at a high temperature compared to the lithium battery of Comparative Example 2.

Industrial Application

According to an aspect, a composite cathode active material includes a shell including a first metal oxide and a phosphorus (P) element doped with a carbon-based material, and accordingly, cycle characteristics of a lithium battery at a high temperature may be improved and an increase in internal resistance of a lithium battery may be suppressed.

Explanation of Reference Numerals Designating the Major Elements of the Drawings

1: Lithium battery
2: Anode
3: Cathode
4: Separator
5: Battery case

6: Cap assembly

## Claims

1. A composite cathode active material comprising:

   a core comprising a lithium transition metal oxide; and
   a shell disposed along a surface of the core,
   wherein the shell comprises: at least one first metal oxide represented by $M_aO_b$ (where $0<a\leq3$, $0<b<4$, and when a is 1, 2, or 3, b is not an integer); a carbon-based material; and a doped phosphorus (P) element, and the at least one first metal oxide is disposed in a matrix of the carbon-based material, and M is at least one metal selected from Groups 2 to 13, 15, and 16 of the Periodic Table of Elements.

2. The composite cathode active material of claim 1, wherein a content of the doped P element comprised in the shell is greater than 0 at% and up to 5 at% based on the total number of atoms in the shell.

3. The composite cathode active material of claim 1, wherein a content of the at least one first metal included in the shell is greater than 0 at% and up to 10 at% based on the total number of atoms in the shell, and a content of oxygen comprised in the shell is greater than 0 at% and up to 10 at% based on the total number of atoms in the shell.

4. The composite cathode active material of claim 1, wherein a content of carbon comprised in the shell is in a range of about 80 at% to about 99 at% based on the total number of atoms in the shell.

5. The composite cathode active material of claim 1, wherein a metal comprised in the at least one first metal oxide comprises at least one metal selected from Al, Nb, Mg, Sc, Ti, Zr, V, W, Mn, Fe, Co, Pd, Cu, Ag, Zn, Sb, and Se.

6. The composite cathode active material of claim 1, wherein the at least one first metal oxide is at least one selected from $Al_2O_z$ (where $0<z<3$), $NbO_x$ (where $0<x<2.5$), $MgO_x$ (where $0<x<1$), $Sc_2O_z$ (where $0<z<3$), $TiO_y$ (where $0<y<2$), $ZrO_y$ (where $0<y<2$), $V_2O_z$ (where $0<z<3$), $WO_y$ (where $0<y<2$), $MnO_y$ (where $0<y<2$), $Fe_2O_z$ (where $0<z<3$), $Co_3O_w$ (where $0<w<4$), $PdO_x$ (where $0<x<1$), $CuO_x$ (where $0<x<1$), $AgO_x$ (where $0<x<1$), $ZnO_x$ (where $0<x<1$), $Sb_2O_z$ (where $0<z<3$), and $SeO_y$ (where $0<y<2$).

7. The composite cathode active material of claim 1, wherein the shell further comprises a second metal oxide represented by Formula $M_aO_c$ (where $0<a\leq3$, $0<c\leq4$, and when a is 1, 2, or 3, c is an integer),

   the second metal oxide comprises a metal identical to a metal comprised in the at least one first metal oxide, and a ratio of c to a, i.e., c/a, in the second metal oxide is greater than a ratio of b to a, i.e., b/a, in the at least one first metal oxide.

8. The composite cathode active material of claim 7, wherein the second metal oxide is selected from $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$, and
   the at least one first metal oxide is a reduction product of the second metal oxide.

9. The composite cathode active material of claim 1, wherein the shell has a thickness in a range of about 1 nm to about 5 μm.

10. The composite cathode active material of claim 1, wherein the carbon-based material is graphene.

11. The composite cathode active material of claim 1, wherein the shell comprises at least one selected from: a composite comprising the at least one first metal oxide and the P element doped with the carbon-based material; and a milling product of the composite, and
    a content of the at least one of the composite and the milling product of the composite is less than or equal to about 3 wt% based on the total weight of the composite cathode active material.

12. The composite cathode active material of claim 11, wherein the carbon-based material has a branched structure, and the at least one first metal oxide is distributed in the branched structure, and

the branched structure comprises a plurality of carbon-based materials in contact with one another.

**13.** The composite cathode active material of claim 11, wherein the carbon-based material has at least one structure selected from a spherical structure, a spiral structure in which the spherical structures are linked to one another, and a cluster structure in which the spherical structures are aggregated,

the at least one first metal oxide is distributed in the spherical structure, and a size of the spherical structure is in a range of about 50 nm to about 300 nm, a size of the spiral structure is in a range of about 500 nm to about 100 μm, and a size of the cluster structure is in a range of about 0.5 mm to about 10 cm,
the composite has a crumpled faceted-ball structure or a planar structure, and at least one of the at least one first metal oxide and a second metal oxide is distributed inside or on a surface of the crumpled faceted-ball structure or the planar structure, and
the carbon-based material extends from the at least one first metal oxide by a distance of less than or equal to about 10 nm, and comprises at least 1 to 20 carbon-based material layers, and a total thickness of the carbon-based material is in a range of about 0.6 nm to about 12 nm.

**14.** The composite cathode active material of claim 1, wherein the lithium transition metal oxide is represented by one of Formulae 1 to 5:

Formula 1 $Li_aNi_xCo_yM_zO_{2-b}A_b$

wherein, in Formula 1,

$1.0 \leq a \leq 1.2$, $0 \leq b \leq 0.2$, $0.8 \leq x < 1$, $0 < y \leq 0.3$, $0 < z \leq 0.3$, and $x+y+z=1$,
M is at least one selected from the group consisting of manganese (Mn), cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), and boron (B), and
A is F, S, Cl, Br, or a combination thereof,

Formula 2 $LiNi_xCo_yMn_zO_2$

Formula 3 $LiNi_xCo_yAl_zO_2$

wherein, in Formulae 2 and 3, $0.8 \leq x \leq 0.95$, $0 < y \leq 0.2$, $0 < z \leq .2$, and $x+y+z=1$,

Formula 4 $LiNi_xCo_yMn_zAl_wO_2$

wherein, in Formula 4, $0.8 \leq x \leq 0.95$, $0 < y \leq 0.2$, $0 < z \leq .2$, $0 < w \leq 0.2$, and $x+y+z+w=1$,

Formula 5 $Li_aCo_xM_yO_{2-b}A_b$

wherein, in Formula 5,
$1.0 \leq a \leq 1.2$, $0 \leq b \leq 0.2$, $0.9 \leq x \leq 1$, $0 \leq y \leq 0.1$, and $x+y=1$,
M is at least one selected from the group consisting of Mn, Co, Nb, V, Mg, Ga, Si, W, Mo, Fe, Cr, Cu, Zn, Ti, Al, and B, and
A is F, S, Cl, Br, or a combination thereof.

**15.** A cathode comprising the composite cathode active material of any one of claims 1 to 14.

**16.** A lithium battery comprising:

the cathode of claim 15;
an anode; and
an electrolyte disposed between the cathode and the anode.

**17.** A method of preparing a composite positive electrode active material, the method comprising:

providing a lithium transition metal oxide;

providing a composite; and
mechanically milling the lithium transition metal oxide and the composite,
wherein the composite comprises: at least one first metal oxide represented by $M_aO_b$ (where 0<a≤3, 0<b<4, and when a is 1, 2, or 3, b is not an integer); a carbon-based material; and a doped phosphorus (P) element, and the at least one first metal oxide is disposed in a matrix of the carbon-based material, and M is at least one metal selected from Groups 2 to 13, 15, and 16 of the Periodic Table of Elements.

**18.** The method of claim 17, wherein the providing of the composite comprises

supplying reaction gas consisting of a carbon supply source to at least one second metal oxide represented by $M_aO_c$ (where 0<a≤3, 0<c≤4, and when a is 1, 2, or 3, c is an integer) and performing heat treatment thereon to provide an undoped composite; and
mixing the undoped composite and a phosphorus (P)-containing compound and performing heat treatment thereon to provide a composite,
wherein M is at least one metal selected from Groups 2 to 13, 15, and 16 of the Periodic Table of Elements.

**19.** The method of claim 18, wherein the P-containing compound is a compound represented by Formula 6 or 7:

Formula 6 Formula 7

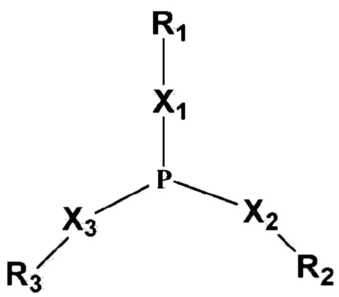

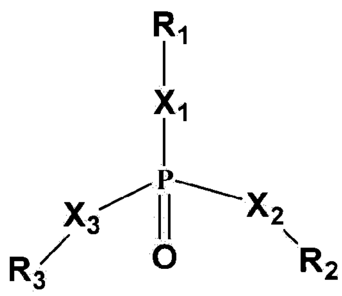

wherein, in the formulae above,

$X_1$, $X_2$, and $X_3$ are each independently a covalent bond, O, S, or $NR_4$,
$R_1$, $R_2$, $R_3$, and $R_4$ are each independently a C1-C10 alkyl group unsubstituted or substituted with a halogen, a C1-C10 cyanoalkyl group unsubstituted or substituted with a halogen, a C2-C10 alkenyl group unsubstituted or substituted with a halogen, a C5-C20 aryl group unsubstituted or substituted with a halogen, a C2-C20 heteroaryl group unsubstituted or substituted with a halogen, or $-Si(R_5)(R_6)(R_7)$, and
$R_5$, $R_6$, and $R_7$ are each independently a C1-C5 alkyl group unsubstituted or substituted with a halogen.

FIG. 1

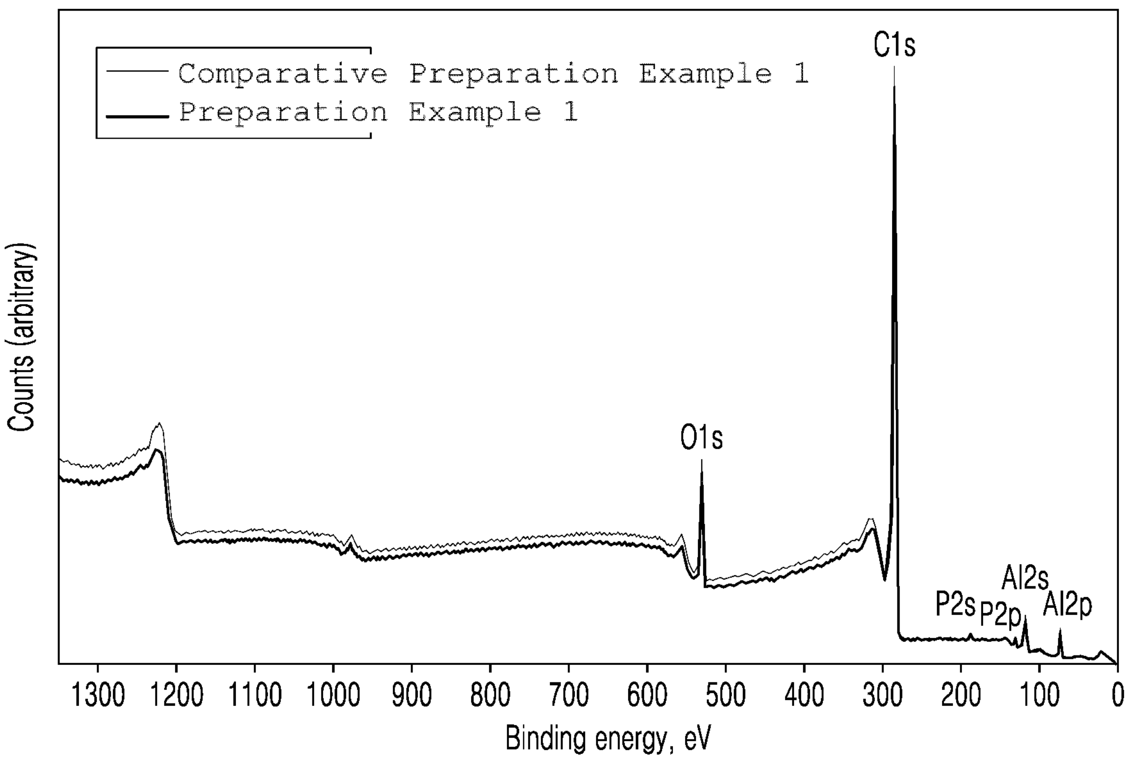
Comparative Preparation Example 1
Preparation Example 1
C1s
O1s
P2s
P2p
Al2s
Al2p
Counts (arbitrary)
1300
1200
1100
1000
900
800
700
600
500
400
300
200
100
0
Binding energy, eV

FIG. 2

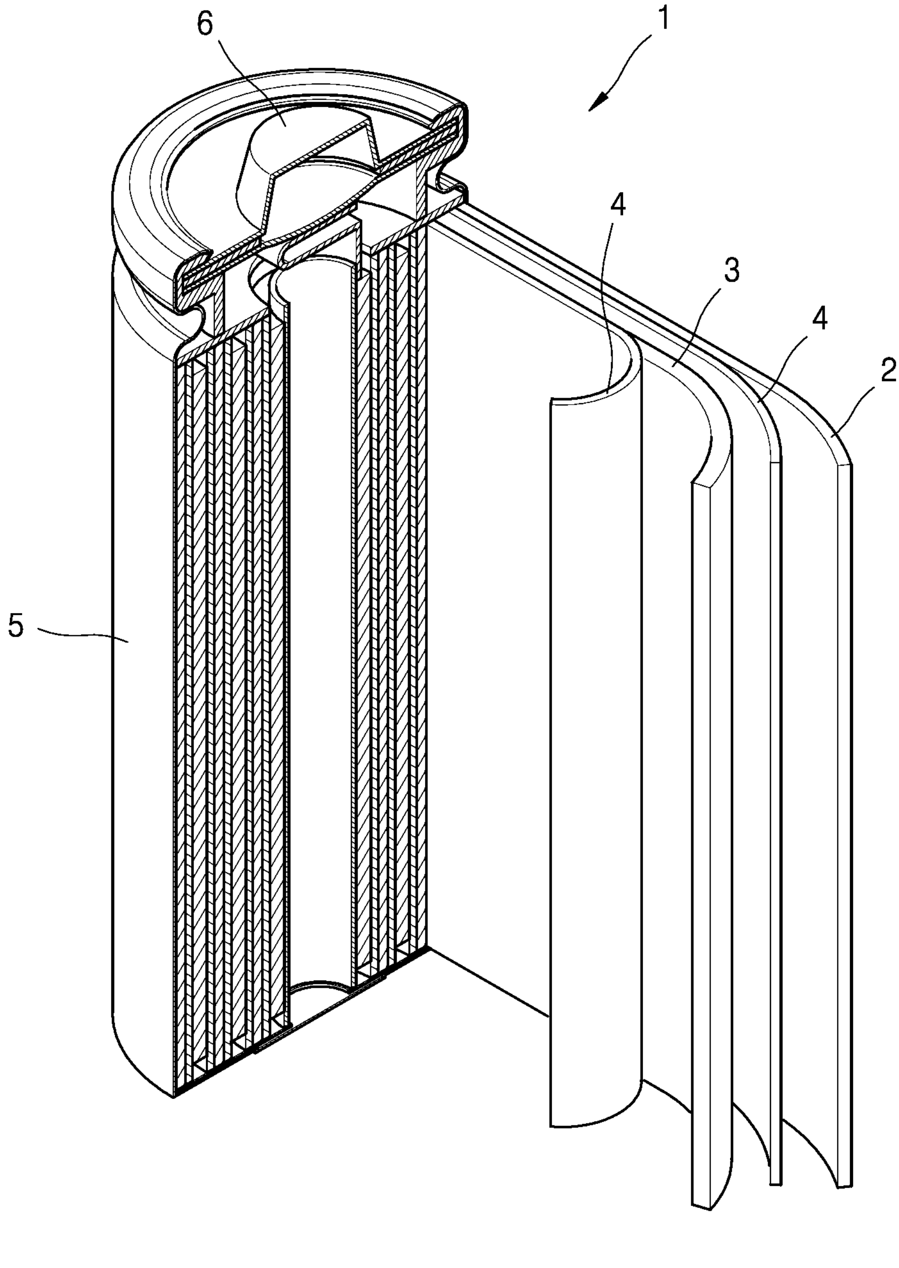

## INTERNATIONAL SEARCH REPORT

International application No.
**PCT/KR2022/004740**

**A. CLASSIFICATION OF SUBJECT MATTER**

**H01M 4/36**(2006.01)i; **H01M 4/62**(2006.01)i; **H01M 4/525**(2010.01)i; **H01M 4/505**(2010.01)i; **H01M 10/052**(2010.01)i; **C01G 53/00**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); H01M 10/052(2010.01); H01M 4/505(2010.01); H01M 4/525(2010.01); H01M 4/58(2010.01); H01M 4/583(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극활물질(positive electrode active material), 탄소계 재료(carbon-based material), 금속산화물(metal oxide), 도핑(doping), 인(phosphorus), 코어-쉘(core-shell)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2015-0017012 A (SAMSUNG ELECTRONICS CO., LTD.) 16 February 2015 (2015-02-16) See claims 1, 2, 5, 7, 9, 10, 12-14, 16 and 17; paragraphs [0032], [0049], [0050] and [0130]-[0132]; and figure 1. | 1-7,9-12,14-17 |
| A | | 8,13,18,19 |
| Y | KR 10-2016-0127887 A (DONGGUK UNIVERSITY INDUSTRY-ACADEMIC COOPERATION FOUNDATION) 07 November 2016 (2016-11-07) See claims 1, 10 and 18; and paragraph [0051]. | 1-7,9-12,14-17 |
| A | KR 10-2010-0081953 A (LG CHEM, LTD.) 15 July 2010 (2010-07-15) See claims 1-14. | 1-19 |
| A | KR 10-2020-0046485 A (SAMSUNG ELECTRONICS CO., LTD. et al.) 07 May 2020 (2020-05-07) See entire document. | 1-19 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 July 2022** | **07 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

International application No. **PCT/KR2022/004740**

**C. DOCUMENTS CONSIDERED TO BE RELEVANT**

| Category* | Citation of document, with indication, where appropriate, of the relevant passages | Relevant to claim No. |
|---|---|---|
| A | KR 10-1573421 B1 (UNIST ACADEMY-INDUSTRY RESEARCH CORPORATION) 02 December 2015 (2015-12-02)<br>See entire document. | 1-19 |

Form PCT/ISA/210 (second sheet) (July 2019)

**INTERNATIONAL SEARCH REPORT**
**Information on patent family members**

International application No.
**PCT/KR2022/004740**

| Patent document cited in search report | Publication date (day/month/year) | Patent family member(s) | Publication date (day/month/year) |
|---|---|---|---|
| KR 10-2015-0017012 A | 16 February 2015 | KR 10-2214826 B1 | 10 February 2021 |
| | | US 10276870 B2 | 30 April 2019 |
| | | US 2015-0037680 A1 | 05 February 2015 |
| KR 10-2016-0127887 A | 07 November 2016 | KR 10-1686614 B1 | 15 December 2016 |
| | | US 10593943 B2 | 17 March 2020 |
| | | US 2018-0123128 A1 | 03 May 2018 |
| | | WO 2016-175426 A1 | 03 November 2016 |
| KR 10-2010-0081953 A | 15 July 2010 | CN 102265432 A | 30 November 2011 |
| | | CN 102265432 B | 13 February 2018 |
| | | KR 10-1134397 B1 | 09 April 2012 |
| | | US 2011-0165463 A1 | 07 July 2011 |
| | | US 9627689 B2 | 18 April 2017 |
| | | WO 2010-079963 A2 | 15 July 2010 |
| | | WO 2010-079963 A3 | 14 October 2010 |
| KR 10-2020-0046485 A | 07 May 2020 | CN 111092197 A | 01 May 2020 |
| | | EP 3693341 A1 | 12 August 2020 |
| | | JP 2020-068208 A | 30 April 2020 |
| | | US 2020-0136132 A1 | 30 April 2020 |
| KR 10-1573421 B1 | 02 December 2015 | KR 10-2014-0013391 A | 05 February 2014 |
| | | WO 2014-017752 A1 | 30 January 2014 |

Form PCT/ISA/210 (patent family annex) (July 2019)